# EUROPEAN PATENT SPECIFICATION

(11) **EP 2 697 115 B1**
(45) Date of publication and mention of the grant of the patent: **13.07.2016**
(21) Application number: 12712714.0
(22) Date of filing: 22.03.2012
(51) Int. Cl.: B64C 25/34, B64C 25/42

(54) **AIRCRAFT LANDING GEAR**
FAHRWERK FÜR EIN FLUGZEUG
TRAIN D'ATTERRISSAGE D'AVION

(30) Priority: 13.04.2011 GB 201106253
(43) Date of publication of application: 19.02.2014
(73) Proprietor: Messier-Dowty Ltd, Gloucester, Gloucestershire GL2 9QH (GB)
(72) Inventor: GOODBURN, Simon, Gloucester, Gloucestershire GL4 5XZ (GB)
(74) Representative: Latham, Stuart Alexander
(86) International application number: PCT/GB2012/050629
(87) International publication number: WO 2012/140404

(56) References cited:
- GB-A- 809 949
- US-A- 4 043 607
- US-A- 6 149 100
- US-A1- 2007 158 496

## Description

### Background of the Invention

Large aircraft are often provided with a number of multi-axle landing gear. For example, such a landing may comprise a bogie beam carrying two or more axles, each axle carrying one or more wheel assemblies and one or more brake assemblies arranged to apply a braking force to the wheel assemblies, to slow the aircraft whilst is it on the ground. As will be appreciated by a person skilled in the art, a brake torque is generated as a brake assembly transmits a braking force to the wheel assembly. It is therefore necessary to provide means by which the brake torque can be reacted, to inhibit the brake assembly from rotating with the wheel assembly during application of the braking force.

It is known to provide brake rods to perform the function of reacting the brake torque generated as a brake assembly applies a braking force to a wheel assembly. However, the present inventor has identified that a number of problems exist with known landing gears having brake rods to provide the above mentioned functionality. For example, the mass of the brake rods themselves are in some cases greater than needs be, which contributes to the total mass of the aircraft. Also, the mass of the coupling infrastructure i.e. the means by which the brake rods mechanically couple to a brake assembly and an anchor point on the landing gear, can be greater than needs be, which again contributes to the total mass of the aircraft.

GB 809,949A describes an aircraft undercarriages comprising a main leg pivoted at its upper end to the aircraft, a trailing link pivoted at its forward end to the lower end of the leg, a bogie frame pivoted between its ends at to the rear end of the trailing link and carrying land wheels fore and aft of its pivot, and a telescopic shock absorber adjacent the leg and pivoted at its upper end to the leg and at its lower end to the bogie frame or to the link rearwardly of the pivot between the link and the leg, whereby raising and lowering of the bogie on the link with respect to the leg causes contraction and extension of the shock absorber.

### Summary of the Invention

According to a first aspect of the present invention, there is provided an aircraft landing gear including:
a bogie beam coupled to a main strut;
a first axle mounted on the bogie beam, the first axle carrying a first brake assembly and a first wheel assembly;
a second axle mounted on the bogie beam, the second axle carrying a second brake assembly and a second wheel assembly, the first and second axles being adjacent to one another so as to form an axle pair; a first stabilising arm arranged to mechanically couple the first brake assembly to a first anchor point on the landing gear so as to react a first brake torque generated as the first brake assembly applies a braking force to the first wheel assembly; and a second stabilising arm arranged to mechanically couple the second brake assembly to a second anchor point on the landing gear so as to react a second brake torque generated as the second brake assembly applies a braking force to the second wheel assembly, wherein the first and second stabilising arms are arranged to couple the respective first and second brake assemblies to the respective first and second anchor points such that the first and second brake torques result in both stabilising arms experiencing a tensile force.

The landing gear may include a third axle mounted on the bogie beam, the third axle carrying a third brake assembly and a third wheel assembly, and a third stabilising arm arranged to mechanically couple the third brake assembly to a third anchor point on the landing gear so as to react a third brake torque generated as the third brake assembly transmits a braking force to the third wheel assembly, wherein the third stabilizing arm couples the third brake assembly to the third anchor point such that the third brake torque results in the third stabilising arm experiencing the same force from a tensile force as experienced by both the first and second stabilising arms due the respective first and second brake torques.

The third anchor point may be provided on the second brake assembly and may be provided in the same region as a connection point between the second stabilising arm and the second brake assembly and may be provided coaxially with respect to connection point between the second stabilising arm and the second brake assembly and may be coupled to the second stabilising arm via a common connection point.

The landing gear may include a fourth axle mounted on the bogie beam, the fourth axle carrying a fourth brake assembly and a fourth wheel assembly and a fourth stabilising arm arranged to mechanically couple the fourth brake assembly to a fourth anchor point on the landing gear so as to react a fourth brake torque generated as the fourth brake assembly transmits a braking force to the fourth wheel assembly, wherein the fourth stabling arm couples the fourth brake assembly to the fourth anchor point such that the fourth brake torque results in the fourth stabilising arm experiencing the same force from a tensile force as experienced by all of the first, second and third stabilising arms due to the respective first, second and third brake torques.

One or more of the stabilising arms may be attached to their respective brake assembly at a respective brake assembly connection point and wherein a respective plane is defined intersecting the respective anchor point and the axis of rotation of the wheel assembly, the brake assembly connection point being on the side of the plane in which the direction of rotation of the wheel assembly is away from the anchor point during forward motion of the aircraft during taxiing.

A portion of the circumference of the respective wheel assembly on the side of the respective plane in which the direction of rotation of the respective wheel assembly is away from the respective anchor point during forward motion of the aircraft during taxiing may define an arc and wherein the respective anchor point is within a portion of the arc between ¼ π radians and ¾ π radians from the start of the arc.

One or more of the anchor points may be located on a direct path between the brake assembly connection points of the respective axle pair.

Two of the anchor points may be coaxial. The two coaxial anchor points may belong to the stabilising arms of a wheel pair.

Two of the stabilising arms may be coupled to one another via a common anchor point. Two of the stabilising arms may be defined by a single member.

The bogie beam may be pivotally connected to the strut at a bogie pivot and the first and second anchor points are coaxial with, and optionally defined by, the bogie pivot.

One wheel assembly may have an axis of rotation that is generally coaxial with the bogie pivot axis.

According to a second aspect of the present invention, there is provided an aircraft landing gear including:
a bogie beam coupled to a main strut of an aircraft;
a first axle mounted on the bogie beam, the first axle carrying first brake means and a first wheel assembly;
a second axle mounted on the bogie beam, the second axle carrying second brake means and a second wheel assembly, the first and second axles being adjacent so as to form an axle pair;
first stabilising means arranged to mechanically couple the first brake means to a first anchor point on the landing gear so as to react a first brake torque generated as the first brake means applies a braking force to the first wheel assembly; and
second stabilising means arranged to mechanically couple the second brake means to a second anchor point on the landing gear so as to react a second brake torque generated as the second brake means applies a braking force to the second wheel assembly,
wherein the first and second stabling means couple the respective first and second brake means to the respective first and second anchor points such that the first and second brake torques result in both stabilising means experiencing a tensile.

According to a third aspect of the present invention, there is provided an aircraft including an aircraft landing gear according to the first or second aspect.

These and other aspects of the present invention will become apparent from, and clarified with reference to, the embodiments described herein.

### Brief Description of the Drawings

Embodiments of the present invention will now be described, by way of example only, with reference to the accompanying drawings, in which
Figure 1 shows a schematic partial side view of a known aircraft landing gear;
Figure 2 shows a schematic partial side view of an aircraft landing gear according to a first embodiment of the present invention;
Figure 3 shows a schematic partial side view of an aircraft landing gear according to a second embodiment of the present invention;
Figure 4 shows a schematic partial side view of an aircraft landing gear according to a third embodiment of the present invention; and
Figure 5 shows a schematic partial side view of an aircraft landing gear according to a fourth embodiment of the present invention;

### Specification Description of Embodiments of the Invention

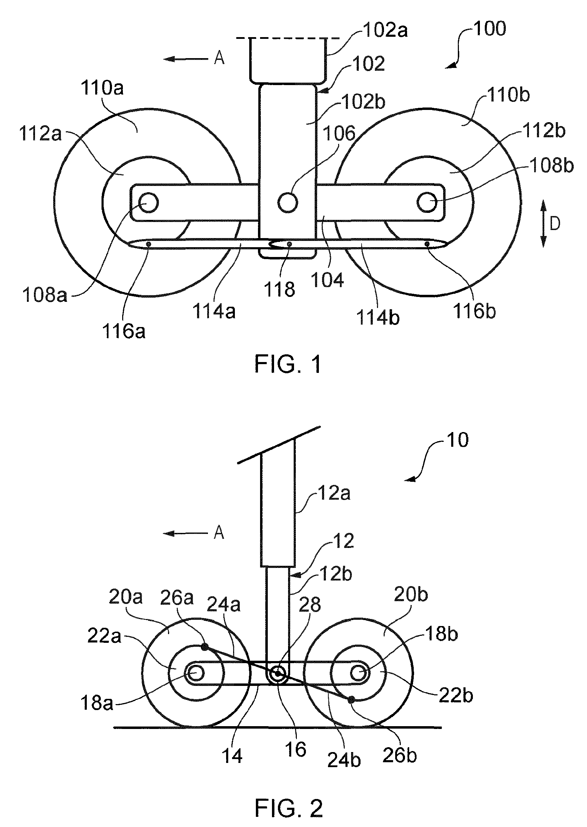

Figure 1 shows a schematic partial side view of a known aircraft landing gear 100. The landing gear 100 has a main shock absorbing strut 102 consisting of an upper cylinder 102a within which is telescopically housed a lower cylinder 102b. A bogie beam 104 is pivotally mounted to a lower end region of the lower strut cylinder 102b at a bogie pivot 106.

The bogie beam 104 carries a first axle 108a fore of the bogie pivot 106. The first axle 108a carries a first wheel assembly 110a and a first brake assembly 112a. The first brake assembly 112a is arranged to apply a braking force to the first wheel assembly 110a.

The bogie beam 104 further carries a second axle 108b aft of the pivot axle 106. The second axle 108b carries a second wheel assembly 110b and second brake assembly 112b, the second brake assembly 112b being arranged to apply a braking force to the second wheel assembly 110b.

Each of the wheel assemblies 110a, 110b and brake assemblies 112a, 112b are mounted so as to freely rotate about the axis of the respective axles 108a, 108b.

The first brake assembly 112a is mechanically coupled to the landing gear strut 102 via a first brake rod 114a. The first brake rod 114a is coupled to the main strut 102 via an anchor point 118, which may be a pin or the like, and coupled to the first brake assembly 112a via a pin 116a.

Similarly, the second brake assembly 112b is mechanically coupled to the landing gear main strut 102 via a second brake rod 114b, the second brake rod 114b being coupled to the main strut 102 via the anchor point 118 and to the second brake assembly 112b via a pin 116b.

In use, with the aircraft travelling in the direction of arrow A, the brake assemblies 112a, 112b may be activated so as to apply a braking force to the wheel assemblies 110a, 110b. The brake rods 114a, 114b are arranged to react the brake torque generated due to the applied braking force. The brake torque from the first brake assembly 112a results in the first brake rod 114a experiencing a compressive force as it reacts the brake torque. However, the brake torque generated by the second brake assembly 112b is experienced by the second brake rod 114b as a tensile force. Due to this, the first brake rod 114a of prior art landing gears is generally thicker than the second brake rod 114b, so as to be mechanically strong enough to react the compressive load applied to it due to the breaking torque. The second brake rod 114b need not be as strong as the first 114, because it only experiences a tensile force due to the brake torque.

As can be seen from Figure 1, the centre of the bogie pivot 106 is spaced from the centre of the anchor point 118 by a distance D. Thus, as the bogie 104 pivots about bogie pivot 106, the brake rods 114a, 114b also pivot about the anchor point 118, resulting in rotation of the brake assemblies 112a, 112b. Similarly, if a brake assembly 112a, 112b applies a braking force to a rotating wheel assembly 110a, 110b for example a short time after take-off, this can result in the generation of a bogie articulation moment due to the displacement D between the axis of rotation of the bogie pivot 106 and anchor point 118.

Figure 2 shows a schematic, partial side view of an aircraft landing gear according to a first embodiment of the present invention. The aircraft landing gear 10 is similar to the landing gear 100 in that it includes a main shock absorbing strut 12 having upper 12a and lower 12b telescopic portions, the lower telescopic portion 12b being pivotally connected to a bogie beam 14 at a bogie pivot 16.

The bogie beam 14 carries a first axle 18a fore of the bogie pivot 16. The first axle 18a carries a first wheel assembly 20a and a first brake assembly 22a. The first brake assembly 22a is arranged to apply a braking force to the first wheel assembly 20a.

The bogie beam 14 further carries a second axle 18a aft of the pivot axle 16. The second axle 18b carries a second wheel assembly 20b and second brake assembly 22b, the second brake assembly 22b being arranged to apply a braking force to the second wheel assembly 20a. The first and second axles 18a, 18b are adjacent, i.e. do not have a further wheel assembly axle between them, and thus form an axle pair.

The landing gear 10 according to the illustrated embodiments of the invention differs from the landing gear 100 in that the first and second brake rods 24a, 24b are arranged such that they couple the respective brake assemblies 22a, 22b to the common anchor point such that the brake torques applied to the brake rods 24a, 24b by the first and second brake assemblies 22a, 22b are reacted by each brake rod 24a, 24b in a tensile manner. This provides an advantage of neither of the brake rods 24a, 24b needing to be robust enough to withstand a compressive load applied by virtue of the braking torque, which may reduce the total mass of the landing gear.

In the illustrated embodiment, the landing gear 10 is arranged with brake assembly connection pins 26a, 26b, by which the brake rods 24a, 24b are coupled to the respective brake assemblies 22a, 22b, each provided on the side of a respective plane, which will be referred to as the "direction plane", in which the direction of rotation of the respective wheel assembly is away from the bogie anchor point 28 during forward motion of the aircraft during taxiing, the respective plane intersecting the bogie anchor point 28 and the axis of rotation of the respective wheel assembly 20a, 20b. Thus, in the illustrated embodiment the directional plane for each wheel assembly 22a, 22b would coincide with the longitudinal axis or centreline of the bogie beam 14, due to the fact that the bogie anchor point 28 lies on the longitudinal axis. As can be seen, the first brake assembly connection point 26a lies above the longitudinal axis and is thus on a side of the respective plane in which the direction of rotation of the wheel assembly 20a is away from the bogie anchor point 28. Similarly, the second brake assembly connection point 26b lies below the longitudinal axis and thus is on a side of the respective plane in which the second wheel assembly 20b moves away from the bogie anchor point 28.

Preferably, the circumference of a respective wheel assembly on the side of the direction plane in which the direction of rotation of the respective wheel assembly is away from the respective bogie anchor point during forward motion of the aircraft during taxiing defines an arc and the respective brake assembly connection point is within a region of the arc between ¼ π radians and ¾ π radians from the start of the arc. This provides mechanical advantage in terms of reacting the brake torque.

Due to the fact that both brake rods 24a, 24b are loaded in the same manner i.e. in this embodiment loaded in a tensile manner, the brake rods can be coupled to one another such that the loads experience due to the respective brake torques at least partial, and in some cases substantially cancel one another out. In the illustrated embodiment this is achieved by the brake rods 24a, 24b having a common bogie anchor point 28 provided at the same distance from each of the brake assembly connection points 26a, 26b. Preferably, the common anchor point lies on a direct path between the brake assembly connection points 26a, 26b. In some embodiments two of the brake rods may be defined by a single member, which in some cases results in a reduction in material in comparison to the provision of two individual brake rods. Embodiments of the present invention having an anchor point that is common to two brake rods is advantageous over prior art landing gears because with known arrangements the pin or the like defining the anchor point must be of a size and strength such that it can withhold a compressive force applied by one brake rod and a tensile force applied by the second brake rod. With such embodiments according to the present invention, the pin or the like defining the anchor point need only be strong enough to react a tensile or compressive force applied by one brake rod, because during normal operation the brake rod loading will at least partially cancel one another out and in a failure condition the anchor point need only withstand the force applied via a single rod.

In use, with the aircraft travelling in the direction of arrow A, the brake assemblies 22a, 22b may be activated so as to apply a braking force to the wheel assemblies 20a, 20b. The brake rods 24a, 24b are arranged to react the brake torque during braking. The brake torque from the first brake assembly 22a results in the first brake rod 24a experiencing a tensile force as it reacts the brake torque. The brake torque from the second brake assembly 22b results in the second brake rod 24b also experiencing a tensile force as it reacts the brake torque. Due to this, both brake assemblies 22a, 22b need only be mechanically strong enough to react the tensile loads applied due to the breaking torques.

As can be seen from Figure 2, in the illustrated embodiment the bogie pivot 16 axis is coaxial with the centre of the anchor point 18. Thus, pivotal movement of the bogie 14 does not result in rotation of the brake assemblies 22a, 22b. Similarly, substantially no bogie articulation moment is generated due to a brake assembly 22a, 22b applying a braking force to a freely rotating wheel assembly 20a, 20b, for example a short time after take-off.

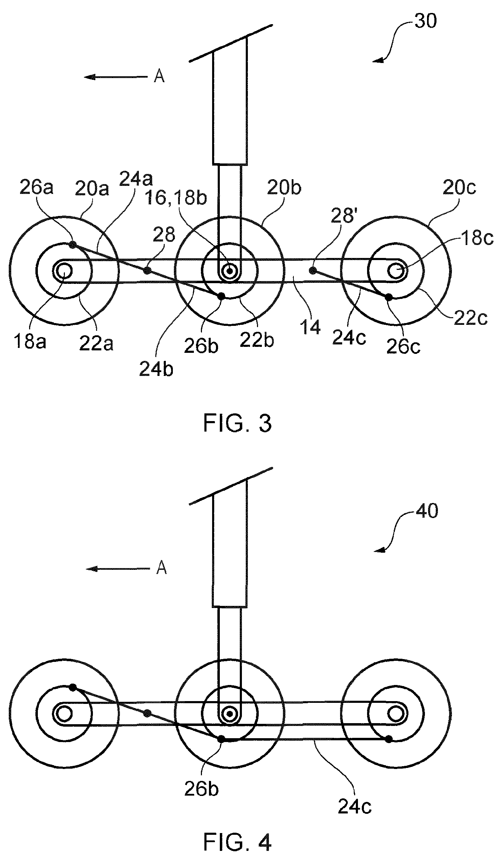

Figure 3 shows a schematic, partial side view of a landing gear 30 according to a second embodiment of the present invention. The landing gear 30 is similar to landing gear 10 except that the second axle 18b is coaxial with the bogie pivot 16 and the bogie beam 14' includes a third axle 18c carrying a third wheel assembly 20c and third brake assembly 22c.

The first and second brake rods 24a, 24b again have a common bogie anchor point 28 by which they are coupled to the bogie beam 14. The third brake assembly 22c is coupled to the bogie beam 14 via a third brake rod 24c. The third brake assembly connection point 26c lies on a side of a respective plane bisecting the connection point 26c and the axis of rotation of the third axle 18c in which the third wheel assembly 20c moves away from the bogie anchor point 28' when the aircraft is moving along the ground in direction A. Consequently, the third brake rod 24c reacts braking torque from the third brake assembly 22c in a tensile manner, as is the case for the first and second brake rods 24a, 24b.

The second embodiment, like the first embodiment, has an advantage that the brake rods are all of the same or generally the same size and configuration and as such contributes to commonality of parts.

Figure 4 shows a schematic, partial side view of a landing gear according to a third embodiment of the present invention. The landing gear 40 is similar to the landing gear 30 of the second embodiment. However, the second brake assembly connection point 26b now also forms the anchor point for the third brake rod 24c.

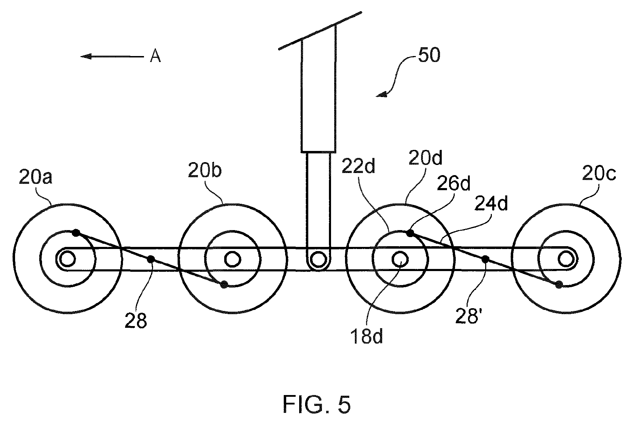

Figure 5 shows a schematic, partial side view of a landing gear 50 according to a fourth embodiment of the present invention. The landing gear 50 according to this embodiment includes a fourth axle 18d carrying a fourth wheel assembly 20d and brake assembly 22d. The first and second wheel assemblies 20a, 20b form a first axle pair and include a similar brake rod arrangement to the axle pair described in the first embodiment. The third and fourth wheel assemblies 20c, 20d form a second axle pair, having a brake rod arranged similar to that of the axle pair of the first embodiment. However, for each of the pairs of wheel assemblies, the respective common bogie anchor point 28, 28' lies on the bogie beam between the wheel assemblies within each pair, rather than an anchor point being coaxial with the bogie point. As with the other embodiments, each of the brake rods are configured to couple the respective brake assemblies to an anchor point on the landing gear such that they each react brake torque generated by the respective brake assemblies by way of a tensile force.

Although in the described embodiments, brake rods have been specifically described to couple the brake assemblies to a part of the landing gear, in other embodiments any suitable stabilising coupling arm may be provided.

Although the landing gears of the illustrated embodiments each show a single wheel mounted on a particular axle, in other embodiments two or more wheels may be provided on each axle. Furthermore, each wheel assembly may be provided with an associated brake assembly and each brake assembly may include a brake rod arranged to mechanically couple the brake assembly to a part of the landing gear such that the brake rod reacts brake torque in the same manner to other brake rods i.e. either by way of a tensile force.

Although pins have been described to couple the brake rods to the respective parts of the landing gear, any suitable mechanical attachment means may be provided.

The term "couple" is intended to cover both direct or an indirect connections between two parts.

An "anchor point" can be any suitable location on the landing gear to which a brake rod can be anchored such that it can react a brake torque so as to stabilise the position of a brake assembly.

## Claims

1. An aircraft landing gear (10) including:
a bogie beam (14) coupled to a main strut;
a first axle (18a) mounted on the bogie beam, the first axle carrying a first brake assembly (22a) and a first wheel assembly (20a);
a second axle (18b) mounted on the bogie beam, the second axle carrying a second brake assembly (22b) and a second wheel assembly (20b), the first and second axles being adjacent so as to form an axle pair;
a first stabilising arm (24a) arranged to mechanically couple the first brake assembly to a first anchor point (28) on the landing gear so as to react a first brake torque generated as the first brake assembly applies a braking force to the first wheel assembly; and
a second stabilising arm (24b) arranged to mechanically couple the second brake assembly to a second anchor point (28) on the landing gear so as to react a second brake torque generated as the second brake assembly applies a braking force to the second wheel assembly,
**characterised in that** the first and second stabilising arms couple the respective first and second brake assemblies to the respective first and second anchor points such that the first and second brake torques result in both stabilising arms experiencing a tensile force.

2. An aircraft landing gear (10) according to claim 1, including a third axle (18c) mounted on the bogie beam, the third axle carrying a third brake assembly (22c) and a third wheel assembly (20c), and a third stabilising arm (24c) arranged to mechanically couple the third brake assembly to a third anchor point (28') on the landing gear so as to react a third brake torque generated as the third brake assembly transmits a braking force to the third wheel assembly, wherein the third stabling arm couples the third brake assembly to the third anchor point such that the third brake torque results in the third stabilising arm experiencing a tensile force.

3. An aircraft landing gear (10) according to claim 2, wherein the third anchor point (26b) is provided on the second brake assembly and optionally is provided in the same region as a connection point between the second stabilising arm and the second brake assembly and
optionally is provided coaxially with respect to connection point between the second stabilising arm and the second brake assembly and optionally is coupled to the second stabilising arm via a common connection point.

4. An aircraft landing gear (10) according to and of claims 2 and 3, including a fourth axle (18d) mounted on the bogie beam, the fourth axle carrying a fourth brake assembly (22d) and a fourth wheel assembly (20d) and a fourth stabilising arm (24d) arranged to mechanically couple the fourth brake assembly to a fourth anchor point (28') on the landing gear so as to react a fourth brake torque generated as the fourth brake assembly transmits a braking force to the fourth wheel assembly, wherein the fourth stabling arm couples the fourth brake assembly to the fourth anchor point such that the fourth brake torque results in the fourth stabilising arm experiencing a tensile force.

5. An aircraft landing gear (10) according to any preceding claim, wherein one or more of the stabilising arms are attached to their respective brake assembly at a respective brake assembly connection point and wherein a respective plane is defined intersecting the respective anchor point and the axis of rotation of the wheel assembly, the brake assembly connection point being on the side of the plane in which the direction of rotation of the wheel assembly is away from the anchor point during forward motion of the aircraft during taxiing.

6. An aircraft landing gear (10) according to claim 5, wherein a portion of the circumference of the respective wheel assembly on the side of the respective plane in which the direction of rotation of the respective wheel assembly is away from the respective anchor point during forward motion of the aircraft during taxiing defines an arc and wherein the respective anchor point is within a portion of the arc between ¼ π radians and ³/₄ π radians from the start of the arc.

7. An aircraft landing gear (10) according to any of claims 5 and 6, wherein one or more of the anchor points are located on a direct path between the brake assembly connection points of the respective axle pair.

8. An aircraft landing gear (10) according to any preceding claim, wherein two of the anchor points are coaxial.

9. An aircraft landing gear (10) according to claim 8, wherein the two coaxial anchor points belong to the stabilising arms of a wheel pair.

10. An aircraft landing gear (10) according to any preceding claim, wherein the bogie beam is pivotally connected to the strut at a bogie pivot (28) and the first and second anchor points are coaxial with, and optionally defined by, the bogie pivot.

11. An aircraft landing gear (10) according to claim 10, wherein one wheel assembly has an axis of rotation that is generally coaxial with the bogie pivot axis.

12. An aircraft landing gear (10) including:
a bogie beam coupled to a main strut of an aircraft;
a first axle mounted on the bogie beam, the first axle carrying first brake means and a first wheel assembly;
a second axle mounted on the bogie beam, the second axle carrying second brake means and a second wheel assembly, the first and second axles being adjacent so as to form an axle pair;
first stabilising means arranged to mechanically couple the first brake means to a first anchor point on the landing gear so as to react a first brake torque generated as the first brake means applies a braking force to the first wheel assembly; and
second stabilising means arranged to mechanically couple the second brake means to a second anchor point on the landing gear so as to react a second brake torque generated as the second brake means applies a braking force to the second wheel assembly, **characterised in that** the first and second stabling means couple the respective first and second brake means to the respective first and second anchor points such that the first and second brake torques result in both stabilising means experiencing a tensile force.

13. An aircraft including an aircraft landing gear (10) according to any preceding claim.

## Patentansprüche

1. Ein Flugzeugfahrwerk (10) aufweisend:
einen Drehgestellträger (14), der mit einer Hauptstrebe gekoppelt ist;
eine erste Achse (18a), die an dem Drehgestellträger befestigt ist, die erste Achse trägt eine erste Bremsanordnung (22a) und eine erste Radanordnung (20a);
eine zweite Achse (18b), die an dem Drehgestellträger befestigt ist, die zweite Achse trägt eine zweite Bremsanordnung (22b) und eine zweite Radanordnung (20b), die erste und zweite Achsen sind benachbart, um ein Achsenpaar zu bilden;
einen ersten Stabilisierungsarm (24a), der angeordnet ist die erste Bremsanordnung mit einem ersten Ankerpunkt (28) an dem Fahrwerk mechanisch zu koppeln, um ein erstes Bremsmoment einzuwirken, das erzeugt wird, weil die erste Bremsanordnung eine Bremskraft auf die erste Radanordnung aufbringt; und
einen zweiten Stabilisierungsarm (24b), der angeordnet ist die zweite Bremsanordnung mit einem zweiten Ankerpunkt (28) an dem Fahrwerk mechanisch zu koppeln, um ein zweites Bremsmoment einzuwirken, das erzeugt wird, weil die zweite Bremsanordnung eine Bremskraft auf die zweite Radanordnung aufbringt,
**dadurch gekennzeichnet, dass** die ersten und zweiten Stabilisierungsarme die jeweiligen erste und zweite Bremsanordnungen mit den jeweiligen erste und zweite Ankerpunkten derart koppeln, dass die erste und zweite Bremsmomente darin resultieren, dass beide Stabilisierungsarme eine Zugkraft erfahren.

2. Ein Flugzeugfahrwerk (10) gemäß Anspruch 1, aufweisend eine dritte Achse (18c), die an dem Drehgestellträger befestigt ist, die dritte Achse trägt eine dritte Bremsanordnung (22c) und eine dritte Radanordnung (20c), und einen dritte Stabilisierungsarm (24c), der angeordnet ist die dritte Bremsanordnung mit einem dritten Ankerpunkt (28') an dem Fahrwerk mechanisch zu koppeln, um eine drittes Bremsmoment einzuwirken, das erzeugt wird, weil die dritte Bremsanordnung eine Bremskraft auf die dritte Radanordnung aufbringt, wobei der dritte Stabilisierungsarm die dritte Bremsanordnung mit dem dritten Ankerpunkt derart koppelt, dass das dritte Bremsmoment darin resultiert, dass der dritte Stabilisierungsarm eine Zugkraft erfährt.

3. Ein Flugzeugfahrwerk (10) gemäß Anspruch 2, wobei der dritte Ankerpunkt (26b) an der zweiten Bremsanordnung vorgesehen ist und optional in dem gleichen Bereich wie ein Verbindungspunkt zwischen dem zweiten Stabilisierungsarm und der zweiten Bremsanordnung vorgesehen ist und optional koaxial bezüglich Verbindungspunkt zwischen dem zweiten Stabilisierungsarm und der zweiten Bremsanordnung vorgesehen ist und optional mit dem zweiten Stabilisierungsarm via einen gemeinsamen Verbindungspunkt gekoppelt ist.

4. Ein Flugzeugfahrwerk (10) gemäß einem der Ansprüche 2 und 3, aufweisend eine vierte Achse (18d), die an dem Drehgestellträger befestigt ist, die vierte Achse trägt eine vierte Bremsanordnung (22d) und eine vierte Radanordnung (20d) und einen vierten Stabilisierungsarm (24d), der angeordnet ist die vierte Bremsanordnung mit einem vierten Ankerpunkt (28') an dem Fahrwerk mechanisch zu koppeln, um ein viertes Bremsmoment einzuwirken, das erzeugt wird, weil die vierte Bremsanordnung eine Bremskraft auf die vierte Radanordnung überträgt, wobei der vierte Stabilisierungsarm die vierte Bremsanordnung mit dem vierten Ankerpunkt derart koppelt, dass das vierte Bremsmoment darin resultiert, dass der vierte Stabilisierungsarm eine Zugkraft erfährt.

5. Ein Flugzeugfahrwerk (10) gemäß einem der vorhergehenden Ansprüche, wobei ein oder mehrere der Stabilisierungsarme an ihre jeweilige Bremsanordnung an einem jeweiligen Bremsanordnungsverbindungspunkt angebracht sind und wobei eine jeweilige Ebene definiert ist, die den jeweiligen Ankerpunkt und die Rotationsachse der Radanordnung schneidet, der Bremsanordnungsverbindungspunkt ist auf der Seite der Ebene, in welcher die Richtung der Rotation der Radanordnung weg von dem Ankerpunkt während Vorwärtsbewegung des Flugzeugs während des Rollens ist.

6. Ein Flugzeugfahrwerk (10) gemäß Anspruch 5, wobei ein Abschnitt des Kreisbogens der jeweiligen Radanordnung in der Seite der jeweiligen Ebene, in welcher die Richtung der Rotation der jeweiligen Radanordnung weg von dem jeweiligen Ankerpunkt während Vorwärtsbewegung des Flugzeugs während des Rollens einen Kreisboden definiert und wobei der jeweilige Ankerpunkt innerhalb eines Abschnitts des Kreisbogens zwischen ¼ π Bogenmaß und ¾ π Bogenmaß von dem Anfang des Kreisbogens ist.

7. Ein Flugzeugfahrwerk (10) gemäß einem der Ansprüche 5 und 6, wobei ein oder mehrere der Ankerpunkte sich in einem direkten Weg zwischen den Bremsanordnungsverbindungspunkten des jeweiligen Achsenpaars befinden.

8. Ein Flugzeugfahrwerk (10) gemäß einem der vorhergehenden Ansprüche, wobei zwei der Ankerpunkte koaxial sind.

9. Ein Flugzeugfahrwerk (10) gemäß Anspruch 8, wobei die zwei koaxialen Ankerpunkte zu den Stabilisierungsarmen eines Radpaares gehören.

10. Ein Flugzeugfahrwerk (10) gemäß einem der vorhergehenden Ansprüche, wobei der Drehgestellträger drehbar an der Strebe an einem Drehgestelllager (28) angelenkt ist und die erste und zweite Ankerpunkte koaxial mit dem Drehgestelllager und optional definiert durch das Drehgestelllager sind.

11. Ein Flugzeugfahrwerk (10) gemäß Anspruch 10, wobei eine Radanordnung eine Rotationsachse aufweist, die im Allgemeinen koaxial mit der Drehgestelllagerachse ist.

12. Ein Flugzeugfahrwerk (10) aufweisend:
einen Drehgestellträger, der mit einer Hauptstrebe eines Flugzeugs gekoppelt ist;
eine erste Achse, die an dem Drehgestellträger befestigt ist, die erste Achse trägt erste Bremsmittel und eine erste Radanordnung;
eine zweite Achse, die an dem Drehgestellträger befestigt ist, die zweite Achse trägt zweite Bremsmittel und eine zweite Radanordnung, die erste und zweite Achsen sind benachbart, um ein Achsenpaar zu bilden;
erste Stabilisierungsmittel, die angeordnet sind die ersten Bremsmittel mit einem ersten Ankerpunkt an dem Fahrwerk mechanisch zu koppeln, um ein erstes Bremsmoment einzuwirken, das erzeugt wird, weil die ersten Bremsmittel eine Bremskraft auf die erste Radanordnung aufbringen; und
zweite Stabilisierungsmittel, die angeordnet sind die zweiten Bremsmittel mit einem zweiten Ankerpunkt an dem Fahrwerk mechanisch zu koppeln, um ein zweites Bremsmoment einzuwirken, das erzeugt wird, weil die zweiten Bremsmittel eine Bremskraft auf die zweite Radanordnung aufbringen, **dadurch gekennzeichnet, dass** die ersten und zweiten Stabilisierungsmittel die jeweilige ersten und zweiten Bremsmittel mit den jeweiligen ersten und zweiten Ankerpunkten derart koppeln, dass die ersten und zweiten Bremsmomente darin resultieren, dass beide Stabilisierungsmittel eine Zugkraft erfahren.

13. Flugzeug aufweisend ein Flugzeugfahrwerk (10) gemäß einem der vorhergehenden Ansprüche.

## Revendications

1. Train d'atterrissage d'avion (10) qui inclut :
un balancier de bogie (14) couplé avec une jambe principale (12) ;
un premier axe (18a) monté sur le balancier de bogie, le premier axe supportant un premier ensemble freins (22a) et un premier ensemble roues (20a) ;
un deuxième axe (18b) monté sur le balancier de bogie, le deuxième axe supportant un deuxième ensemble freins (22b) et un deuxième ensemble roues (20b), les premier et deuxième axes étant adjacents, de manière à former une paire d'axes ;
un premier bras de stabilisation (24a) agencé de manière à coupler mécaniquement le premier ensemble freins à un premier point d'ancrage (28) sur le train d'atterrissage de manière à actionner un premier couple de freinage généré lorsque le premier ensemble freins applique une force de freinage sur le premier ensemble roues ; et
un deuxième bras de stabilisation (24b) agencé de manière à coupler mécaniquement le deuxième ensemble freins avec un deuxième point d'ancrage (28) sur le train d'atterrissage de manière à actionner un deuxième couple de freinage généré lorsque le deuxième ensemble freins applique une force de freinage sur le deuxième ensemble roues,
**caractérisé en ce que** les premier et deuxième bras de stabilisation couplent les premier et deuxième ensembles de freinage respectifs avec les premier et deuxième points d'ancrage respectifs de telle sorte que les premier et deuxième couples de freinage provoquent l'application d'une force de traction aux deux bras de stabilisation.

2. Train d'atterrissage d'avion (10) selon la revendication 1, comprenant un troisième axe (18c) monté sur le balancier de bogie, le troisième axe supportant un troisième ensemble freins (22c) et un troisième ensemble roues (20c), et un troisième bras de stabilisation (24c) agencé pour coupler mécaniquement le troisième ensemble freins à un troisième point d'ancrage (28') sur le train d'atterrissage de manière à actionner un troisième couple de freinage généré lorsque le troisième ensemble freins transmet une force de freinage sur le troisième ensemble roues, dans lequel le troisième bras de stabilisation couple le troisième ensemble freins avec le troisième point d'ancrage de telle sorte que le troisième couple de freinage provoque l'application d'une force de traction au troisième bras de stabilisation.

3. Train d'atterrissage d'avion (10) selon la revendication 2, dans lequel le troisième point d'ancrage (26b) est prévu sur le deuxième ensemble freins et en option, est prévu dans la même région qu'un point de raccordement situé entre le deuxième bras de stabilisation et le deuxième ensemble freins et en option, est prévu coaxial par rapport au point de raccordement entre le deuxième bras de stabilisation et le deuxième ensemble freins et, en option, est couplé avec le deuxième bras de stabilisation via un point de raccordement commun.

4. Train d'atterrissage d'avion (10) selon l'un quelconque des revendications 2 à 3, comprenant un quatrième axe (18d) monté sur le balancier de bogie, le quatrième axe supportant un quatrième ensemble freins (22d) et un quatrième ensemble roues (20d), et un quatrième bras de stabilisation (24d) agencé pour coupler mécaniquement le quatrième ensemble freins avec un quatrième point d'ancrage (28') sur le train d'atterrissage de manière à actionner un quatrième couple de freinage généré lorsque le quatrième ensemble freins transmet une force de freinage au quatrième ensemble roues, dans lequel le quatrième bras de stabilisation couple le quatrième ensemble freins au quatrième point d'ancrage de telle sorte que le quatrième couple de freinage provoque l'application d'une force de traction au quatrième bras de stabilisation.

5. Train d'atterrissage d'avion (10) selon l'une quelconque des revendications précédentes, dans lequel l'un ou plusieurs des bras de stabilisation sont fixés à leur ensemble freins respectif au niveau d'un point de raccordement de l'ensemble freins respectif et dans lequel un plan respectif est défini intersectant le point d'ancrage respectif et l'axe de rotation de l'ensemble roues, le point de raccordement de l'ensemble freins étant situé du côté du plan dans lequel le sens de rotation de l'ensemble roues est éloigné du point d'ancrage pendant la marche avant de l'avion au cours du roulage.

6. Train d'atterrissage d'avion (10) selon la revendication 5, dans lequel une portion de la circonférence de l'ensemble roues respectif du côté du plan respectif dans lequel le sens de rotation de l'ensemble roues respectif est éloigné du point d'ancrage respectif pendant la marche avant de l'avion au cours du roulage définit un arc et dans lequel le point d'ancrage respectif se trouve au sein d'une portion de l'arc entre ¼_{π} radians et 3/4_{π} radians à partir du début de l'arc.

7. Train d'atterrissage d'avion (10) selon l'une quelconque des revendications 5 et 6, dans lequel l'un ou plusieurs des points d'ancrage sont situés sur un chemin direct entre les points de raccordement des ensembles freins de la paire d'axes respectifs.

8. Train d'atterrissage d'avion (10) selon l'une quelconque des revendications précédentes, dans lequel deux des points d'ancrage sont coaxiaux.

9. Train d'atterrissage d'avion (10) selon la revendication 8, dans lequel les deux points d'ancrage coaxiaux appartiennent aux bras de stabilisation d'une paire de roues.

10. Train d'atterrissage d'avion (10) selon l'une quelconque des revendications, dans lequel le balancier de bogie est monté pivotant sur la jambe au niveau d'un pivot de bogie (28) et les premier et deuxième points d'ancrage sont coaxiaux avec, et en option définis par, le pivot de bogie.

11. Train d'atterrissage d'avion (10) selon la revendication 10, dans lequel un ensemble roues possède un axe de rotation qui est généralement coaxial avec l'axe du pivot de bogie.

12. Train d'atterrissage d'avion (10) qui inclut :
un balancier de bogie couplé à une jambe principale d'un avion ;
un premier axe monté sur le balancier de bogie, le premier axe supportant un premier ensemble freins et un premier ensemble roues ;
un deuxième axe monté sur le balancier de bogie, le deuxième axe supportant un deuxième ensemble freins et un deuxième ensemble roues, les premier et deuxième axes étant adjacents, de manière à former une paire d'axes ;
un premier bras de stabilisation agencé de manière à coupler mécaniquement le premier ensemble freins avec un premier point d'ancrage sur le train d'atterrissage de manière à actionner un premier couple de freinage généré lorsque le premier ensemble freins applique une force de freinage sur le premier ensemble roues ; et
un deuxième bras de stabilisation agencé de manière à coupler mécaniquement le deuxième ensemble freins à un deuxième point d'ancrage sur le train d'atterrissage de manière à actionner un deuxième couple de freinage généré lorsque le deuxième ensemble freins applique une force de freinage sur le deuxième ensemble roues, **caractérisé en ce que** les premier et deuxième bras de stabilisation couplent les premier et deuxième ensembles de freinage respectifs avec les premier et deuxième points d'ancrage respectifs de telle sorte que les premier et deuxième couples de freinage provoquent l'application d'une force de traction aux deux bras de stabilisation.

13. Avion comprenant un train d'atterrissage d'avion (10) selon l'une quelconque des revendications précédentes.
